(19) Europäisches Patentamt
European Patent Office
Office européen des brevets

(11) **EP 4 146 736 B1**

(12) **EUROPÄISCHE PATENTSCHRIFT**

(45) Veröffentlichungstag und Bekanntmachung des Hinweises auf die Patenterteilung:
**30.07.2025   Patentblatt 2025/31**

(21) Anmeldenummer: **21723228.9**

(22) Anmeldetag: **03.05.2021**

(51) Internationale Patentklassifikation (IPC):
**C08L 25/06** (2006.01)       **C08L 53/02** (2006.01)
**C08K 5/00** (2006.01)        **B32B 27/30** (2006.01)

(52) Gemeinsame Patentklassifikation (CPC):
(C-Sets verfügbar)
**C08L 25/06; B32B 25/14; B32B 27/08;**
**B32B 27/302; C08L 53/02;** B32B 2270/00;
B32B 2439/70; C08K 5/005        (Forts.)

(86) Internationale Anmeldenummer:
**PCT/EP2021/061519**

(87) Internationale Veröffentlichungsnummer:
**WO 2021/224158 (11.11.2021 Gazette 2021/45)**

(54) **THERMOPLASTISCHE POLYMERZUSAMMENSETZUNG MIT VERMINDERTER MIGRATION VON STABILISATOREN**

THERMOPLASTIC POLYMER COMPOSITION WITH REDUCED MIGRATION OF STABILISERS

COMPOSITION DE POLYMÈRE THERMOPLASTIQUE PRÉSENTANT UNE MIGRATION RÉDUITE DES STABILISANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **04.05.2020   EP 20172784**

(43) Veröffentlichungstag der Anmeldung:
**15.03.2023   Patentblatt 2023/11**

(73) Patentinhaber: **INEOS Styrolution Group GmbH 60325 Frankfurt (DE)**

(72) Erfinder: **NIESSNER, Norbert 67159 Friedelsheim (DE)**

(74) Vertreter: **Jacobi, Markus Alexander Patentanwälte Isenbruck Bösl Hörschler PartG mbB Eastsite One Seckenheimer Landstrasse 4 68163 Mannheim (DE)**

(56) Entgegenhaltungen:
**DE-A1- 10 359 450     DE-A1- 4 442 447**

• **BEGLEY T. ET AL: "Evaluation of migration models that might be used in support of regulations for food-contact plastics", FOOD ADDITIVES AND CONTAMINANTS, vol. 22, no. 1, 1 January 2005 (2005-01-01), GB, pages 73 - 90, XP055824619, ISSN: 0265-203X, Retrieved from the Internet <URL:https://www.tandfonline.com/doi/pdf/10.1080/02652030400028035?needAccess=true> DOI: 10.1080/02652030400028035**

• **KANISHKA BHUNIA ET AL: "Migration of Chemical Compounds from Packaging Polymers during Microwave, Conventional Heat Treatment, and Storage : Migration of chemical compounds...", COMPREHENSIVE REVIEWS IN FOOD SCIENCE AND FOOD SAFETY, vol. 12, no. 5, 1 September 2013 (2013-09-01), US, pages 523 - 545, XP055597310, ISSN: 1541-4337, DOI: 10.1111/1541-4337.12028**

(52) Gemeinsame Patentklassifikation (CPC): (Forts.)

C-Sets
**C08L 25/06, C08L 53/02, C08K 5/005;**
**C08L 25/06, C08L 53/02, C08K 5/134;**
**C08L 25/06, C08L 53/02, C08K 5/1345,**
**C08K 5/526, C08L 91/00;**

**C08L 25/06, C08L 53/02, C08K 5/526;**
**C08L 25/06, C08L 53/02, C08L 91/00;**
**C08L 53/02, C08L 25/06, C08K 5/005;**
**C08L 53/02, C08L 25/06, C08K 5/134;**
**C08L 53/02, C08L 25/06, C08K 5/526;**
**C08L 53/02, C08L 25/06, C08L 91/00**

**Beschreibung**

Die vorliegende Erfindung betrifft thermoplastische Polymerzusammensetzungen mit verminderter Migration von Stabilisatoren und/oder weiteren Inhaltsstoffen. Diese thermoplastischen Polymerzusammensetzungen enthalten mindestens ein thermoplastischen Polymer, welches Migrations-Barriere-Eigenschaften für Stabilisatoren bzw. für weitere Inhaltsstoffe aufweist, sowie in einer Ausführungsform mindestens eine Stabilisator-Komponente.

Die funktionellen Barriere-Eigenschaften von diversen Polymeren und Mehrschicht-Verbundstrukturen wurden bislang in der Praxis nicht hinreichend untersucht (siehe z.B. InnoLETTER vom 06.07.2010, Rainer Brandsch, "Recycelter Karton und Papier für Lebensmittelverpackungen? Migration von Mineralöl aus Kartonverpackungen in Lebensmittel kann durch Einbringen einer funktionellen Barriere minimiert werden", InnoLETTER, S. 1-8, siehe www.innoform.de).

Die Wirkung als funktionelle Barriere (FB) von Polymeren, Polymer-Blends und Verbundstrukturen wurde in der Anwendung vorwiegend im Zusammenhang mit der Durchlässigkeit von Gasen, wie z.B. Sauerstoff, Kohlendioxid, Stickstoff und/oder Wasserdampf untersucht. Dabei werden funktionelle Barriere-Eigenschaften von Polymeren und Mehrschicht-Verbundstrukturen gegenüber Stoffen, wie organischen Molekülen, in der wissenschaftlichen Literatur in Form von spezifischen Materialkonstanten und thermodynamischen Stoffkonstanten beschrieben. Dies ermöglicht eine Materialauswahl zum Schutz von z. B. Füllgut (wie Lebensmitteln) von Verpackungen gegen Kontamination durch Stoffe von potentiell toxikologischer oder olfaktorischer Relevanz.

Bei längerem Einsatz von z. B. Verpackungssystemen lässt sich auf Basis der funktionellen Barriere-Eigenschaften der Materialien eine Risikobewertung und ein daraus abgeleiteter Maßnahmenplan entwickeln, der z. B. bei Lebensmitteln oder Arzneimitteln einen sicheren Einsatz von Verpackungsmaterialien einschließlich Druckfarben, Lacken, Beschichtungen, Klebstoffen, etc. gewährleisten kann. In der Regel erübrigen sich dadurch zeit- und kostenintensive Laborprüfungen bzw. diese werden auf ein Minimum reduziert.

DE 103 59 450 A1 offenbart thermoplastische Formmassen enthaltend, wobei sich die Summe zu 100 Gew.-% ergänzt, a) mindestens ein Blockcopolymer A, enthaltend in polymerisierter Form, bezogen auf A, a1) 10 bis 90 Gew.-% mindestens eines Styrolmonomeren, und a2) 10 bis 90 Gew.-% mindestens eines Dienmonomeren, und als Stabilisatoren, bezogen auf die Formmasse, b) 0,001 bis 0,5 Gew.-% mindestens eines phenolischen Acrylats B, c) 0,05 bis 1 Gew.-% mindestens eines organischen Phosphits C, und d) 0,001 bis 1 Gew.-% mindestens einer Stabilisatorverbindung D ausgewählt aus sterisch gehinderten Phenolen, die sich vom phenolischen Acrylat B unterscheiden, und aromatischen Aminen.

Daher ist die Bereitstellung einer kostengünstig herstellbaren, thermoplastischen Polymerzusammensetzung mit einer verminderten Migration von enthaltenen Stabilisator(en) bzw. Inhaltsstoffen eine Aufgabe der Erfindung. Die thermoplastische Polymerzusammensetzung lässt sich zur Herstellung von Verbundsystemen mit zwei oder mehreren Schichten verwenden.

Im Folgenden wird eine thermoplastische Polymerzusammensetzung (A) mit verminderter Migration beschrieben, die mindestens 50 Gew.-%, oftmals mindestens 80 Gew.-%, bezogen auf die Polymerzusammensetzung (A), mindestens eines thermoplastischen Polymers (P) enthält, welches Migrations-Barriere-Eigenschaften, insbesondere für Stabilisator(en) aufweist.

Diese Polymerzusammensetzung (A) enthält mindestens 0,1 Gew.-%, insbesondere 0,1- 2,0 Gew.-%, bezogen auf die Polymerzusammensetzung (A), mindestens einer Stabilisator-Komponente (S). Sie enthält häufig auch weitere Inhaltsstoffe bzw. Additive.

Die Erfindung betrifft insbesondere eine thermoplastische Polymerzusammensetzung (A) mit verminderter Migration von Stabilisatoren (S) und/oder weiteren Inhaltsstoffen (I), enthaltend 50 bis 99,9 Gew.-%, insbesondere mindestens 50 Gew.-%, oftmals mindestens 80 Gew.-%, bezogen auf die Polymerzusammensetzung (A) mindestens eines thermoplastischen Polymer (P), welches Migrations-Barriere-Eigenschaften für Stabilisatoren aufweist, sowie mindestens 0,1 Gew.-%, oftmals 0,1 bis 2,0 Gew.-%, bezogen auf die Polymerzusammensetzung (A), mindestens einer Stabilisator-Komponente (S) und/oder mindestens 0,1 Gew.-%, oftmals 0,1 bis 2,0 Gew.-%, bezogen auf die Polymerzusammensetzung (A), mindestens eines weiteren Inhaltsstoffes (I), wobei für die thermoplastischen Polymerzusammensetzung (A) gilt:

a) die Glasübergangstemperatur $T_g$ des thermoplastischen Polymers (P) liegt oberhalb der maximalen Gebrauchstemperatur von 50 °C, und
b) die Polymerspezifische Konstante für Polymere ($A_P$) des thermoplastischen Polymers (P) liegt bei kleiner 1, wobei die Polymerspezifische Konstante für Polymere ($A_P$) wie in der Beschreibung offenbart ermittelt wird, und
c) der daraus abgeleitete Diffusionskoeffizient ($D_P$) des thermoplastischen Polymers (P) für Mineralöl ist bei 20 °C kleiner $10^{-12}$ cm²/s, wobei Diffusionskoeffizient ($D_P$) wie in der Beschreibung offenbart ermittelt wird, und
d) die Morphologie des thermoplastischen Polymers (P) ist zweiphasig heterogen,

wobei, bei zweiphasig heterogener Morphologie des thermoplastischen Polymers (P), die eine Polymer-Komponente (Pp) mit dem höheren $A_P$-Wert und dem höheren Diffusionskoeffizienten ($D_P$) als diskontinuierliche Phase in Partikelform mit einer gewichtsmittleren Partikelgröße (D) von 20 nm bis 10 $\mu$m vorliegt, eingebettet ist in eine Polymer-Komponente ($P_m$) mit niedrigerem $A_P$-Wert und niedrigerem Diffusionskoeffizienten ($D_P$), und wobei die Morphologie des thermoplastischen Polymers (P) keine co-kontinuierliche Struktur aufweist.

Unter Migrations-Barriere-Eigenschaften wird verstanden, dass die Migration des Stabilisators bzw. des weiteren Inhaltsstoffs in der Polymerzusammensetzung unterbunden oder zumindest verlangsamt ist. Unter einer heterogenen Morphologie ist zu verstehen, dass keine homogene Struktur im Polymer, bzw. der Polymermischung besteht. Dies kann z.B. mittels mikroskopischer Untersuchung beurteilt werden.

Eine Ausführungsform der Erfindung betrifft eine thermoplastische Polymerzusammensetzung (A) mit verminderter Migration, die als thermoplastisches Polymer (P) ein Styrol-haltiges Polymer mit einer Glasübergangstemperatur $T_g$ von mindestens 60 °C, insbesondere mindestens 70 °C enthält.

Die thermoplastische Polymerzusammensetzung (A) mit verminderter Migration, insbesondere für Stabilisatoren, enthält bevorzugt als thermoplastisches Polymer (P) eine Styrol-haltige Polymerkomponente, insbesondere aus der Gruppe bestehend aus Polystyrol (PS), insbesondere HIPS und GPPS, sowie SBS-Copolymer/PS-Blends.

Bevorzugt werden SBC-Copolymer/PS-Blends in der Zusammensetzung verwendet.

Eine weitere Ausführungsform der Erfindung betrifft eine thermoplastische Polymerzusammensetzung (A) mit verminderter Migration, die mindestens eine Stabilisator-Komponente (S) aus der Gruppe bestehend aus Antioxidantien und Licht-Stabilisatoren enthält, und/oder mindestens einen weiteren Inhaltsstoff (I) aus der Gruppe bestehend aus Restmonomeren und Oligomeren enthält. Die verschiedenen Stabilisator-Komponenten (S) und weiteren Inhaltsstoffe (I) werden noch ausführlich beschrieben.

Eine weitere Ausführungsform der Erfindung betrifft eine thermoplastische Polymerzusammensetzung (A) mit verminderter Migration, die 0,1 bis 2,0 Gew.-%, oftmals 0,1-1,0 Gew.-%, bezogen auf die Polymerzusammensetzung (A), mindestens einer Stabilisator-Komponente (S) enthält, insbesondere mindestens ein Antioxidants. Diese werden nachfolgend beschrieben.

Gegenstand der Erfindung ist ferner eine Verbundstruktur, insbesondere geeignet für Verpackungszwecke, enthaltend mindestens zwei unterschiedliche Schichten (S). Dabei besteht mindestens eine Schicht (S1) aus einer thermoplastischen Polymerzusammensetzung (A) mit verminderter Migration wie oben beschrieben, bzw. sie besteht weitgehend daraus.

Diese Verbundstruktur für Verpackungszwecke enthält oftmals mindestens zwei unterschiedliche Schichten, wobei mindestens eine Schicht (S1) weitgehend aus einer thermoplastischen Polymerzusammensetzung (A) aus insbesondere Polystyrol (PS), SBS-Copolymer/PS-Blends und/oder SBC-Copolymer/PS-Blends besteht, und mindestens eine weitere Schicht (S2) weitgehend aus einer nicht Styrol-haltigen thermoplastischen Polymerzusammensetzung (A2) besteht. Diese weitere thermoplastische Polymerzusammensetzung (A2) kann z.B. aus Polyester, Polyurethan und/oder Polyamid bestehen.

Gegenstand der Erfindung ist ferner ein Verfahren zur Herstellung einer thermoplastischen Polymerzusammensetzung (A) mit verminderter Migration von Stabilisatoren (S) und/oder weiteren Inhaltsstoffen (I), wie oben beschrieben, bei dem mindestens ein thermoplastisches Polymer (P), welches Migrations-Barriere-Eigenschaften aufweist, mit mindestens einer Stabilisator-Komponente (S) sowie ggf. weiteren Polymeradditiven vermischt wird. Die weiteren Polymeradditive werden unten beschrieben.

Die Erfindung betrifft ferner die Verwendung einer thermoplastischen Polymerzusammensetzung (A) mit verminderter Migration von Stabilisatoren (S) und/oder weiteren Inhaltsstoffen (I), wie oben beschrieben, zur Herstellung von Folien, Fasern oder Formkörpern.

Gegenstand ist auch die Verwendung einer Verbundstruktur, wie beschrieben, enthaltend mindestens zwei unterschiedliche Schichten, bei der mindestens eine Schicht (S1) aus einer thermoplastischen Polymerzusammensetzung (A) mit verminderter Migration besteht, zur Bereitstellung von Verpackungen mit erhöhtem Widerstand gegen Delamination. Dabei bezeichnet Delamination das sich-Ablösen von Schichten in der Verbundstruktur. Sie ist insbesondere bei mehreren Schichten, z.B. Schicht (S1) wie oben beschrieben, von (S2) und/oder (S3) eine technische Herausforderung.

Die Barriere-Eigenschaften von Polymeren gegenüber organischen Molekülen werden insbesondere durch die sogenannte polymerspezifische Konstante ($A_P$-Wert) beschrieben.

Diese wird von T. Begley, L. Castle et al. beschrieben in "Evaluation of migration models that might be used in support of regulations for food contact plastics" (Food Additives and Contaminants, January 2005; 22(1): 73-90). Für die polymerspezifische Konstante $A_P$ gilt folgende Gleichung (1)

$$A_P = A_P' - \tau/T \qquad\qquad \text{(Gleichung 1)}$$

Der in der Veröffentlichung aus 2005 beschriebene Wert der polymerspezifische Konstante (Ap-Wert) setzt sich aus einem von der Temperatur unabhängigen Anteil Ap' und dem Temperatur-abhängigen Beitrag zur Aktivierungsenergie ($\tau$, Tau) zusammen. T bedeutet in Gleichung 1 die Temperatur.

Tabelle 1 beschreibt die polymerspezifische Konstante $A_P$ einiger üblicher Polymere, die u.a. für die Herstellung von Verpackungen Einsatz finden können.

Polymerspezifische Konstanten ($A_p$) für Polymere

| Polymer | $\overline{A_P}'$ | S | AP'(max) | $A_P'_{(min)}$ | N | t | $A_P'^*$ | T |
|---------|------|------|------|------|----|------|------|------|
| LDPE | 10.0 | 1.0 | 11 | 7.0 | 27 | 1.7 | 11.7 | 0 |
| HDPE | 10.0 | 1.9 | 12.6 | 5.0 | 49 | 1.68 | 13.2 | 1577 |
| PP | 9.4 | 1.8 | 12.9 | 6.2 | 53 | 1.68 | 12.4 | 1577 |
| PET | 2.2 | 2.5 | 7.2 | -4.3 | 58 | 1.67 | 6.35 | 1577 |
| PEN | -0.34 | 2.4 | 3.8 | -5.5 | 38 | 1.7 | 3.7 | 1577 |
| PS | -2.8 | 1.25 | 0.0 | -6.5 | 32 | 1.7 | -0.7 | 0 |
| HIPS | -2.7 | 1.67 | 0 | -6.2 | 33 | 1.7 | 0.1 | 0 |
| PA (6,6) | -1.54 | 2.0 | 2.3 | -7.7 | 31 | 1.7 | 1.9 | 0 |

Die polymerspezifische Konstante $A_P$ ist ein Maß für die Mobilität der Polymere auf molekularer Ebene und erlaubt damit, ihre Barriere-Eigenschaften (bzw. die Diffusionseigenschaften) abzuschätzen.

Flexible Polymere, z.B. Polyethylen (LDPE) oder weichmacherhaltiges Polyvinylchlorid (Weich-PVC), weisen in der Regel eine hohe Mobilität auf, d.h. sie besitzen entsprechend höhere $A_P$-Werte und Diffusionskoeffizienten Dp, was zu geringen Barriere-Eigenschaften führt.

Steifere Polymere, wie z.B. Polyethylenterephthalat (PET) oder Polyamid (PA) zeichnen sich in der Regel durch eine niedrigere Mobilität aus, d.h. sie weisen entsprechend niedrigere Ap-Werte und Diffusionskoeffizienten $D_P$ und führen daher zu besseren Barriere-Eigenschaften.

Die Diffusionsgleichung beschreibt den Diffusionskoeffizienten ($D_P$) wie folgt:

$$D_P \sim \exp\left(A_P - 0{,}1351\ Mr^{2/3} + 0{,}003\ Mr - 10454 / T\right) \qquad \text{(Gleichung 2)}$$

Die polymerspezifische Konstante $A_P$ beschreibt die Polymer-Matrix (z.B. freies Volumen, Kettenmobilität) und ist temperaturabhängig, wie oben in Gleichung 1 gezeigt. Mr ist das Molekulargewicht des Migranten (z.B. Stabilisator, Additiv); T die Temperatur.

Einen weiteren Beitrag zu der Barriere-Wirkung von Polymeren leistet die Löslichkeit des migrierenden Additivs im Polymer bzw. der Polymerzusammensetzung. Die Löslichkeit ist stoffspezifisch und bis auf wenige Medien, wie z.B. Wasser, nur in begrenztem Umfang in der Literatur beschrieben. Ist die Löslichkeit des Stoffs in dem Polymer gering, ist die Barriere-Wirkung des Polymers gegenüber diesem Stoff i.d.R. hoch.

Ein klassisches Beispiel hierfür ist die gute Barriere-Eigenschaft von Polyethylen (PE) gegenüber Wasser bzw. Wasserdampf, weil Wasser in PE nicht löslich ist. Der migrierende Stoff hat auch durch seine molekulare Größe einen Einfluss auf die Barriere-Wirkung des Polymers. Kleine Moleküle wie z.B. Lösemittel, z. B. Aceton, migrieren schneller durch ein Polymer als große Moleküle, wie z.B. übliche Polymer-Additive. Ein praktisches Beispiel aus der Anwendung sind migrationsarme Druckfarben, bei denen gezielt große Moleküle wie z.B. polymere Photo-Initiatoren eingesetzt werden, um niedrige Migrationswerte zu gewährleisten.

Auch die Dicke des Polymer-Produkts selbst beeinflusst dessen Barriere-Wirkung. Dicke Polymerschichten, wie sie z.B. bei Bechern oder Schalen verwendet werden, haben eine höhere Barriere-Wirkung als z.B. dünne Folien aus dem gleichen Polymer. Der Einfluss der Temperatur auf die Migrationsgeschwindigkeit ist hoch, d.h. die gleiche Stoffmigration wird unter Sterilisationsbedingungen (hohe Temperatur) innerhalb einiger Stunden und bei Raumtemperatur (20°C) innerhalb einiger Jahre erreicht.

Ob die Barriere-Wirkung (funktionelle Barriere) eines Polymers in Bezug auf eine konkrete Anwendung (Füllgut, Lagerzeit, Lagertemperatur) ausreichend ist, kann unter ganzheitlicher Betrachtung aller Einflussgrößen (Polymertyp und Polymerdicke, migrierender Stoff und dessen Molekulargewicht und Löslichkeit im Polymer, Lagerzeit und Lagertemperatur, Art des Füllguts) beurteilt werden.

Mineralöl kann zur Untersuchung der Barriere-Eigenschaften eingesetzt werden. Wird z.B. die Barriere-Wirkung von Polymeren gegenüber Mineralöl (mittleres Molekulargewicht 300-520 g/mol) bei Raumtemperatur (ca. 20 °C) betrachtet, so kann bereits anhand der polymerspezifischen Konstanten ($A_P$-Wert) eine sinnvolle Materialauswahl für Verpackungslösungen getroffen werden. Ein hoher $A_P$-Wert bedeutet geringe Barriere-Wirkung und niedriger $A_P$-Wert bedeutet eine hohe Barriere-Wirkung. Entsprechend hat LDPE kaum Barriere-Wirkung gegenüber Mineralöl. Sehr gute Barriere-Wirkung weisen PET oder Polystyrol bereits bei geringen Dicken (ca. 10 $\mu$m) auf.

Tabelle 2 zeigt Polymerspezifische Konstanten ($A_P$) für Polymere und daraus abgeleitete Diffusionskoeffizienten ($D_P$) für Mineralöl bei RT (20°C):

| | $D_P$ [cm$^2$/s] | $A_P$ |
|---|---|---|
| Gase | $\sim 10^{-1}$ | |
| Flüssigkeiten | $\sim 10^{-5}$ | 20 |
| viskose Flüssigkeiten | $\sim 10^{-6}$ | 18 |
| weich PVC | $\sim 10^{-7}$ | 16 |
| Polymere T > $T_g$ | | |
| LDPE | $\sim 10^{-9}$ | 11 |
| HDPE | $\sim 10^{-10}$ | 9 |
| PP | $\sim 10^{-11}$ | 7 |
| Polymere T < $T_g$ | | |
| PA | $\sim 10^{-13}$ | 2 |
| PS | $\sim 10^{-14}$ | ca. 0 |
| PET | $\sim 10^{-15}$ | -2 |
| hart PVC | $\sim 10^{-16}$ | -4 |

$T_g$ ist die Glasübergangstemperatur; T< $T_g$ bedeutet, dass die Einsatztemperatur unterhalb der Glasübergangstemperatur des Polymers liegt.

Aus dem $A_P$-Wert, dem Molekulargewicht des Migranten und der Temperatur kann der Diffusionskoeffizient von Mineralöl in dem jeweiligen Polymer abgeschätzt und für die konkrete anwendungsbezogene Simulation der Migration, das sogenannte Migration Modelling auf der Basis des Diffusionsgesetzes verwendet werden.

Reale Verpackungssysteme bestehen häufig jedoch aus mehreren Materialien und/oder Artikeln wie z.B. Flasche und Deckel oder tiefgezogene Schale und Deckelfolie. Hinzu kommen Etiketten, Banderolen, Schieber, Faltschachteln, Umverpackungen, Transportverpackungen etc., die das Füllgut (fest, flüssig, pastös) teilweise oder ganz umgeben. Dabei befinden sich einige Materialien oder Artikel des Verpackungssystems im direkten Kontakt mit z.B. Lebensmitteln oder Arzneimitteln, andere wiederum nicht. Der Übergang von Mineralöl aus recyceltem Karton oder Papier erfolgt mehrheitlich über die Gasphase. Der Übergang über die Gasphase ist möglich, weil Mineralöl ausreichend flüchtig ist, um von z.B. einer Kartonfaser zu de-sorbieren und an dem innen befindlichen Packstoff bzw. direkt am Lebensmittel zu adsorbieren.

Die Flüchtigkeit eines Stoffes kann durch seinen Dampfdruck bei gegebener Temperatur ausgedrückt werden. Dabei ist zu beachten, dass sich der Dampfdruck des Stoffs deutlich von dem Dampfdruck des adsorbierten oder gelösten Stoffs unterscheiden kann. Niedermolekulare Mineralöle sind stärker flüchtig als hochmolekulare. Der Übergang von Mineralöl auf Lebensmittel wird durch zwei wesentliche Parameter bestimmt, einerseits die spezifische Oberfläche des Lebensmittels, an der das Mineralöl relativ unspezifisch adsorbiert wird, und andererseits der frei verfügbare oder zugängige Fettanteil des Lebensmittels, in dem sich mittel- bis unpolare Stoffe gut lösen, d.h. bevorzugt aufgenommen werden. Eine hohe spezifische Oberfläche von Lebensmitteln wie z.B. bei Mehl, Reis, Cerealien, als auch ein Fettgehalt, z.B. von einigen Prozent in Lebensmitteln, wie z.B. Schokoladenprodukten oder Sandwiches, lässt hohe Migrationswerte an Mineralöl erwarten, sofern recycelter Karton oder Papier zum Verpacken eingesetzt wird.

In Analogie zu der funktionellen Barriere innerhalb eines Materials oder Artikels lässt sich das Konzept der funktionellen Barriere auf eine Verbundstruktur erweitern. Dazu ist es zielführend, die Verbundstruktur als konzentrische, einander zumindest teilweise umgebende Schichten (S) zu betrachten.

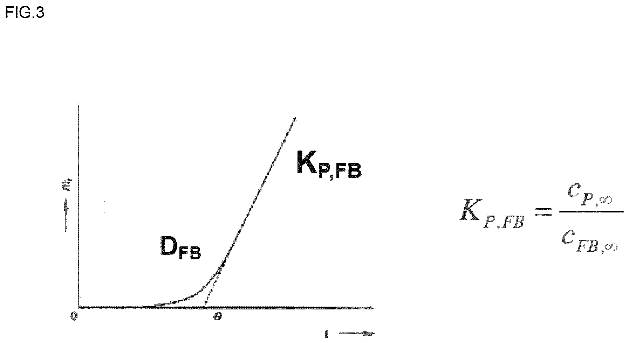

Welche Schicht (S) das Füllgut umschließen soll (z.B. Innenbeutel), gegenüber anderen weiter außen befindlichen Schichten (z.B. Transportverpackung aus (recyceltem) Karton), kann hinsichtlich der funktionellen Barriere-Eigenschaften der Verbundstruktur variiert werden. Die Zeit (t), die ein Stoff (z.B. Stabilisator-Komponente) benötigt, um von außen (z.B. Umverpackung) durch eine funktionelle Barriere (FB)-Schicht (z.B. aus Polymerzusammensetzung) hindurch zu wandern, wird auch Durchbruchzeit (Theta, $\Theta$) genannt (siehe Figur 3).

Gemäß der nachfolgenden Gleichung 3 ist diese Durchbruchzeit (Theta) direkt proportional zu der Dicke (d) des Schicht (S), z. B. eines Innenbeutels, $d_P$ zum Quadrat, und umgekehrt proportional zu dem Diffusionskoeffizienten ($D_{FB}$)

des Materials der funktionellen Barriere (FB), also beispielsweise des thermoplastischen Zusammensetzung (A).

$$\theta = \frac{1}{6} \cdot \frac{d_P^2}{D_{FB}}$$

θ - Durchbruchzeit
d - Dicke
D - Diffusionskoeffizient

(Gleichung 3)

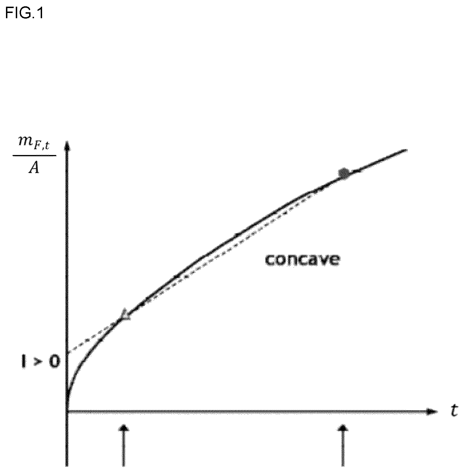

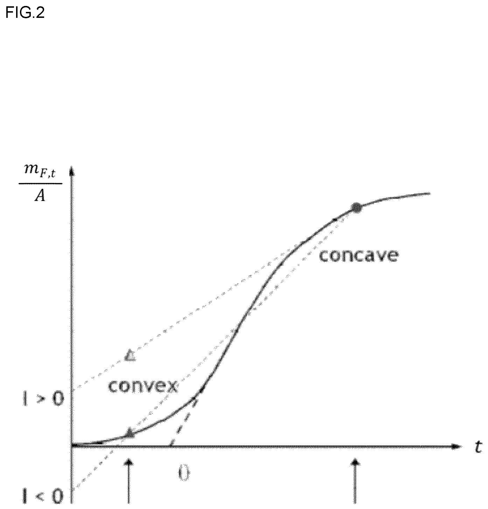

Die Wirkungsweise einer funktionellen Barriere (FB) wird auch in den Abbildungen der **Figuren 1 und 2** dargestellt. Ist keine funktionelle Barriere-Eigenschaft der Polymerschicht (S) vorhanden, so ist der zeitliche Verlauf der Migration wie in **Figur 1** gezeigt zu beobachten. Wird die Migration des Stoffs (z.B. Stabilisators) zu zwei beliebigen Zeitpunkten bestimmt, und werden die beiden Punkte durch eine Gerade verbunden, so wird diese Gerade die y-Achse, die die Migration beschreibt: Migration ($m_{F, t/A}$) immer bei einem positiven Wert (I > 0) schneiden.

Ist jedoch eine funktionelle Barriere-Eigenschaft der Polymerschicht (S) vorhanden, so ist ein zeitlicher Verlauf der Migration wie in **Figur 2** gezeigt zu beobachten. Wird die Migration des Stoffes (z.B. Stabilisators) zu zwei beliebigen Zeitpunkten bestimmt und werden die beiden Punkte durch eine Gerade verbunden, so wird die Gerade die y-Achse (Migration, $m_{F, t/A}$) bei einem negativen Wert (I < 0) schneiden, wenn sich der eine Zeitpunkt innerhalb der Durchbruchszeit (Theta) befindet.

Eine funktionelle Barriere aus einer Polymerzusammensetzung (A) ist gegenüber einer Stabilisator-Komponente (oder weiterem Inhaltsstoff) dann wirksam, wenn die Durchbruchszeit (Theta) möglichst lange ist. Innerhalb der Durchbruchszeit findet dann kein Übergang bzw. Migration der Stabilisator-Komponente von außerhalb der Funktionellen Barriere (FB) in z.B. das (zu schützende) Füllgut statt.

Diese kann auch durch dickere Material-Schichten erreicht werden, was jedoch aus ökologischer und ökonomischer Sicht von wenig zielführend erscheint.

Im Falle von z.B. Flaschen, Bechern und Schalen aus Polymeren sind Materialdicken von einigen hundert Mikrometern oftmals üblich, daher kommt den Durchbruchszeiten von Stoffen besondere Bedeutung zu.

Materialien mit guten funktionellen Barriere-Eigenschaften wie z.B. die Polymerzusammensetzungen (A) und Verbundstrukturen mit mehreren Schichten (S) enthaltend mindestens eine solche Polymerschicht (S1) stellen daher eine technologisch kostengünstig realisierbare Möglichkeit dar. Zielführender ist der Einsatz von Zusammensetzungen, durch die Stoffe (wie Stabilisatoren) sehr langsam hindurch migrieren.

In den Zusammensetzungen (A) weisen Stoffe wie Stabilisatoren einen niedrigen Diffusionskoeffizienten ($D_{FB}$) und eine niedrige Migrationsgeschwindigkeit auf. Ist der Diffusionskoeffizient eines Materials bei einer gegebenen Temperatur bekannt, kann die Durchbruchszeit berechnet werden.

In **Figur 3** wird der qualitative Beitrag der Materialauswahl im Bezug auf die funktionale Barriere-Wirkung dargestellt. Ein Polymer mit einer niedrigen polymerspezifischen Konstante ($A_P$-Wert) führt zu einem niedrigen Diffusionskoeffizienten ($D_{FB}$) und einer entsprechend langen Durchbruchszeit (Θ). Eine geringe Löslichkeit des organischen Moleküls (z.B. des Stabilisators) in dem Polymer ($c_{FB}$) führt zu niedrigen Konzentrationen des Stoffs im Kunststoff und damit zu einem hohen Verteilungskoeffizienten ($K_{P,FB}$). Entsprechend flach verläuft der lineare Bereich der Kurve, wodurch sich auch nach langer Zeit nur niedrige Migrationswerte ($m_t$) ergeben.

Der Diffusionskoeffizient ($D_{FB}$) in Figur 3 beschreibt einerseits die Geschwindigkeit mit der ein Stoff in einen Kunststoff migriert. Andererseits beschreibt der Verteilungskoeffizient ($K_{P,FB}$) die relative Löslichkeit eines Stoffes zwischen benachbarten Schichten/Lagen einer Verbundstruktur (z.B. bei einer Verpackung). Auf der Basis der beiden Koeffizienten lassen sich die funktionellen Barriere-Eigenschaften der Polymerzusammensetzungen (A) in Verbundstrukturen mit mehreren Schichten (S1, S2, etc.) bzw. in Packstoffsystemen im Bezug auf einen weiteren Inhaltsstoff (z.B. Mineralöl) abschätzen.

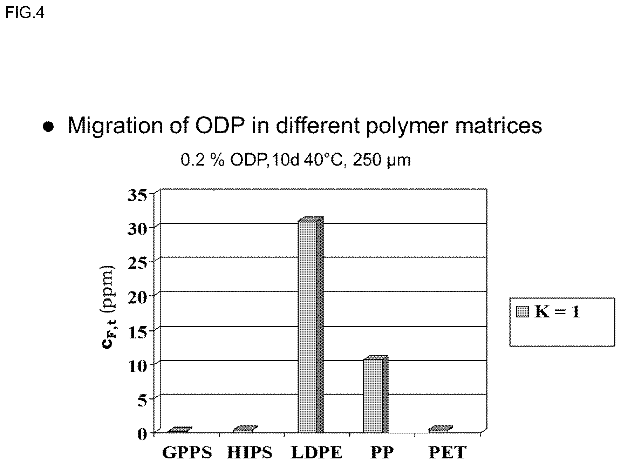

In **Figur 4** wird die quantitative Migration von Mineralöl (ODP) in den Polymeren General Purpose Polystyrene (GPPS), HIPS, LD-Polyethylen, Polypropylen und PET dargestellt (jeweils 0,2 Gew.% ODP, 10 Tage bei 40°C und einer Schichtdicke von 0,25 mm). Es wird ersichtlich, dass Polyethylen und Polypropylen schlechte Migrationsbarriere-Eigenschaften aufweisen, Polystyrol und HIPS hingegen gute Migrationsbarrieren, selbst bei kleiner Schichtdicke sein können.

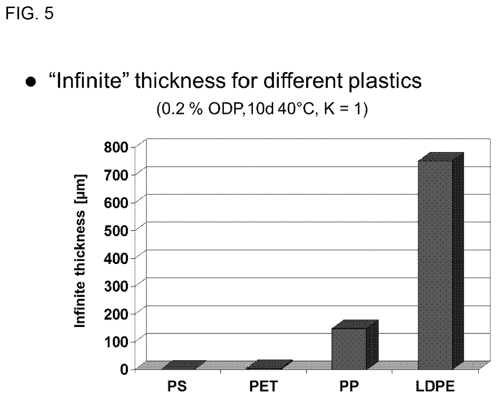

**Figur 5** zeigt die Grenz-Dicke ("Infinitife thickness", $C_{F,t}$) von Folien aus verschiedenen Polymer-Materialien, nämlich Polystyrol (GPPS, HIPS), PET, Polypropylen und LD-Polyethylen (jeweils 0,2 Gew.% ODP, 10 Tage bei 40°C und einer Schichtdicke von 0,25 mm). Es wird ersichtlich, dass man bei Polyethylen und Polypropylen große Dicken der Polymerschicht für eine Migrationsbarriere benötigt, während bei Polystyrol schon im Mikrometer-Bereich der Schichten gute Migrationsbarrieren realisiert werden können.

Gegenstand der Erfindung ist allgemein eine thermoplastische Polymerzusammensetzung (A) mit verminderter Migration. Sie enthält eine Polymerzusammensetzung (A) mit mindestens einem thermoplastischen Polymer (P), welches Migrations-Barriere-Eigenschaften, insbesondere für Stabilisatoren aufweist, sowie mindestens einer Stabilisator-Komponente (S) und/oder mindestens einen weiteren Inhaltsstoff (I), wie z.B. Monomere (wie Styrol) oder Oligomere (z.B. Trimere, etc). Dabei gelten für die thermoplastischen Polymerzusammensetzung (A) die o.g. Bedingungen.

Bei zweiphasiger Morphologie des thermoplastischen Polymers (P) ist die eine Polymer-Komponente (Pp) mit dem höheren Ap-Wert und dem höheren Diffusionskoeffizienten (D$_P$) als diskontinuierliche Phase in Partikelform mit einer gewichtsmittleren Partikelgröße (D) von 20 nm bis 10 $\mu$m eingebettet in eine Polymer-Komponente (P$_M$) mit niedrigerem Ap-Wert und niedrigerem Diffusionskoeffizienten (D$_P$).

Die Morphologie des thermoplastischen Polymers (P) soll keine co-kontinuierliche Struktur aufweisen, sie ist zweiphasig heterogen.

Die Morphologie des thermoplastischen Polymers (P), bevorzugt Polystyrol oder Polystyrol/SBC-Blend, hat insbesondere keine co-kontinuierlicher Struktur. Co-kontinuierliche Strukturen sind z. B. "Bis-continuous double diamond" Strukturen, zylindrische Strukturen (z.B. Zylinder aus Polybutadien in einer Matrix aus Polystyrol), lamellare Strukturen (z.B. Lamellen aus Polybutadien in einer Matrix aus Polystyrol), und interpenetrierende Netzwerke (IPNs).

Die Glasübergangstemperatur T$_g$ des thermoplastischen Polymers (P) liegt vorzugsweise oberhalb 50°C, oftmals oberhalb 60°C, insbesondere oberhalb 70°C.

Die Gebrauchstemperatur des Polymers ist häufig im Bereich der Raumtemperatur (20°C) oder auch im Kühlbereich (-20°C) bis normaler Transport-Temperaturbereich (bis 40°C, maximal 50°C).

Die Polymerspezifische Konstante für Polymere (A$_P$) des thermoplastischen Polymers (P) liegt bei kleiner als 1,0 zum Beispiel bei -2,0 bis 0,95, insbesondere bei -1,8 bis 0,93.

Der Diffusionskoeffizient (D$_P$) des thermoplastischen Polymers (P) für Mineralöl ist bei 20 °C vorzugsweise kleiner oder gleich 10$^{-12}$ cm$^2$/s.

Als thermoplastisches Polymer (P) geeignet sind sowohl Standard-Polystyrol (GPPS, General Purpose Polystyrene, Hersteller z.B. INEOS Styrolution) als auch das schlagfeste Polystyrole, wie HIPS (High Impact Polystyrene, Hersteller z.B. INEOS Styrolution). Häufig werden auch Blends von PS und SBS-Copolymeren oder Blends von PS und SBC-Copolymeren eingesetzt, die die o.g. Kriterien erfüllen.

Die mindestens eine Stabilisator-Komponente (S) ist z.B. ausgewählt aus der Gruppe enthaltend Antioxidantien und Licht-Stabilisatoren.

In einer Ausführung enthält die thermoplastische Polymerzusammensetzung (A) mit verminderter Migration von 50 bis 99,9 Gew.-%, bezogen auf die Polymerzusammensetzung (A), mindestens eines thermoplastischen Polymers (P), sowie 0,1 bis 2,0 Gew.-%, bezogen auf die Polymerzusammensetzung (A), mindestens einer Stabilisator-Komponente (S) und/oder mindestens eines weiteren Inhaltsstoffes (I).

Oftmals enthält die Polymerzusammensetzung (A) 70 bis 99 Gew.-%, bezogen auf die Polymerzusammensetzung (A), mindestens eines thermoplastischen Polymers (P), bzw. oftmals einer Mischung von zwei oder mehreren Polymeren, wie z.B. Polystyrol und Styrol-Copolymer (wie SB-Copolymer).

In einer weiteren Ausführung enthält die thermoplastische Polymerzusammensetzung (A) mit verminderter Migration von Stabilisator (S) und/oder weiteren Inhaltsstoffes (I) als thermoplastisches Polymer (P) ein Styrol-haltiges Polymer mit einer Glasübergangstemperatur T$_g$ von mindestens 60 °C, insbesondere mindestens 70 °C, sowie (optional) als Stabilisator-Komponente (S) bis zu 5 Gew.-%, insbesondere 0,1 bis 2,0 Gew.-%, oftmals 0,1 bis 1,0 Gew.-%, bezogen auf die Polymerzusammensetzung (A), mindestens eines Antioxidans als Additiv.

Oftmals ist das thermoplastische Polymer (P) eine Styrol-haltige Polymerkomponente, bevorzugt aus der Gruppe der Polystyrole (PS), insbesondere HIPS und GPPS, oder ein Blend aus Styrol-haltiger Polymerkomponente und S/B-Block-Copolymer, z.B. ein SBS-Copolymer/PS-Blends oder SBC-Copolymer/PS, z.B. PS-SBC Blend.

Die Stabilisator-Komponente (S) enthält bevorzugt mindestens einen Stabilisator aus der Gruppe der Antioxidantien.

Derartige Antioxidantien haben beispielsweise entweder eine oder mehrere sterisch geschützte phenolische OH-Gruppen, und/oder Phosphit-Einheiten und/oder Schwefelverbindungen. Beispiele für geeignete Antioxidantien sind:

- 2,6-Di-tert-butyl-p-cresol
- 2,2'-Methylen-bis-(4-methyl-6-tert.-butyl-phenol)
- 2,2'-Methylen-bis-(4-methyl-6-cyclohexyl-phenol)
- 2,2'-Methylen-bis-(6-tert-butyl-4-ethylphenol)
- Octadecyl-3-(3,5-di-tert-butyl-4-hydroxyphenyl)propionat
- Pentaerythritol-tetrakis(3-(3,5-di-tert-butyl-4-hydroxyphenyl)propionat)
- Octyl-3,5-di-tert-butyl-4-hydroxy-hydrocinnamat
- Triethylenglycol-bis-(3-tert-butyl-4-hydroxy-5-methylphenyl)propionat
- Thiodiethylen-bis-[3-(3,5-di-tert-butyl-4-hydroxyphenyl)propionat]
- N,N'-Hexan-1,6-diylbis[3-(3,5-di-tert-butyl-4-hydroxyphenylpropionamid]
- 6,6'-di-tert-butyl-4,4'-butylidendi-m-cresol
- 1,3,5-Trimethyl-2,4,6-tris(3,5-di-tert-butyl-4-hydroxybenzyl)benzol

- 2,4-Bis(octylthio)-6-(4-hydroxy-3,5-di-tert-butylanilino)-1,3,5-triazin
- 2-Methyl-4,6-bis(octylsulfanylmethyl)phenol
- Phenol, 4-methyl-, reaction products dicyclopentadiene and isobutylene
- 1,2-Di[-(3,5-di-tert-butyl-4-hydroxyp-henyl)propionyl]hydrazin
- 3,3'-Bis(3,5-di-tert-butyl-4-hydroxyphenyl)-n,n'-bipropionamid
- 2-(1,1-Dimethylethyl)-6-[[3-(1,1-dimethylethyl)-2-hydroxy-5-methylphenyl]methyl]-4-methylphenylacrylat
- 2-(1-(2-Hydroxy-3,5-di-tert-pentyl-phenyl)ethyl)-4,6-di-tert-pentylphenyl acrylat
- 2-tert-Butyl-6-methyl-4-[3-(2,4,8,10-tetratert-butylbenzo[d][1,3,2]benzodioxa-phosphepin-6-yl)oxypropyl]phenol
- 2-(1,1-Dimethylethyl)-6-[[3-(1,1-dimethylethyl)-2-hydroxy-5-methylphenyl]methyl]-4-methylphenylacrylat
- 1,3,5-Tris(3,5-di-tert-butyl-4-hydroxybenzyl)-1,3,5-triazine-2,4,6(1 H,3H,5H)-trion
- 4,4',4"-(1-Methylpropanyl-3-ylidene)tris(6-tert-butyl-m-cresol)
- 3,9-Bis{2-[3-(3-tert-butyl-4-hydroxy-5-methylphenyl)propionyloxy]-1,1-dimethylethyl}-2,4,8,10-tetraoxaspiro[5.5] undecan
- 4,4'-Thiobis(2-tert-butyl-5-methylphenol)
- Ethylen bis[3,3-bis[3-(1,1-dimethylethyl)-4-hydroxyphenyl]butanoat]
- 2,4-Dimethyl-6-(1-methyl pentadecyl) phenol
- Hexamethylen bis[3-(3,5-di-tert-butyl-4-hydroxyphenyl)propionat]
- TNPP (Tris-nonylphenyl)phosphit
- Diethyl 3,5-Di-tert-butyl-4-hydroxybenzylphosphonat
- Calcium-diethyl-bis[[[3,5-bis(1,1-dimethylethyl)-4-hydroxyphenyl]-methyl]phosphonat]
- Tocopherol
- Tris(4-tert-butyl-3-hydroxy-2,6-dimethylbenzyl) isocyanurat
- 3-tert-butyl-2-hydroxy-5-methylphenyl-sulfid
- 4-[[4,6-Bis(n-octylthio)-1,3,5-triazin-2-yl]amino]-2,6-di-tert-butylphenol
- Benzenepropansäure-3,5-bis(1,1-dimethylethyl)-4-hydroxy-,C13-15-Alkylester
- Tris(2,4-di-tert-butylphenyl)phosphit
- andere organophosphor-Stabilisatoren.

Als Beispiele für Stabilisatoren wurden bevorzugt eingesetzt:

(2-Tert-butyl-6-[(3-tert-butyl-2-hydroxy-5-methylphenyl)-methyl]-4-methylphenyl-prop-2-enoat);

TNPP (Tris-nonylphenyl)phosphit,

Als Beispiele für weitere Inhaltsstoffe wurden bevorzugt eingesetzt:
Weißöl, Gleitmittel, Styrol-Oligomere.

Oftmals werden auch Kombinationen verschiedener Stabilisatoren eingesetzt, wobei bevorzugt insgesamt bis zu 2,0 Gew.-%, bezogen auf die Polymerzusammensetzung (A), an Stabilisatoren eingesetzt werden.

Die Erfindung betrifft ferner auch eine Verbundstruktur, insbesondere geeignet für Verpackungszwecke, enthaltend mindestens zwei unterschiedliche Schichten, wobei mindestens eine Schicht (S1) aus einer thermoplastischen Polymerzusammensetzung (A) mit verminderter Migration von Stabilisatoren wie oben beschrieben besteht.

Diese Schicht (S1) ist bevorzugt der Innenseite bei Verpackungen zugewandt, also z.B. für den Kontakt mit Lebensmitteln.

In einer Ausführung enthält die Verbundstruktur mindestens zwei unterschiedliche Schichten, bei der mindestens eine Schicht (S1) aus einer thermoplastischen Polymerzusammensetzung (A) mit verminderter Migration besteht, und eine zweite Schicht (S2), und ggf. weitere Schichten S3, S4, S5, wobei die Verbundstruktur zur Bereitstellung von Verpackungen mit erhöhtem Widerstand gegen Delamination geeignet ist.

Die Erfindung betrifft ferner ein Verfahren zur Herstellung einer thermoplastischen Polymerzusammensetzung (A) mit verminderter Migration, bei dem mindestens ein thermoplastisches Polymer (P), welches Migrations-Barriere-Eigenschaften für Stabilisatoren aufweist, mit einer Stabilisator-Komponente (S) sowie ggf. weiteren Polymeradditiven, die von der Komponente (S) verschieden sind, vermischt werden. Diverse Verfahren zur Vermischung bzw. Compoundierung von thermoplastischen Zusammensetzungen mit Additiven sind dem Fachmann bekannt. Die Stabilisator-Komponente(n) können auch in Form von Master-Batches in die Zusammensetzung eingebracht werden.

In Analogie zu der funktionellen Barriere innerhalb eines Materials oder Artikels lässt sich das erfindungsgemäße Konzept der funktionellen Barriere auf ein gesamtes Verpackungssystem erweitern. Dazu ist es zielführend, ein Verpackungssystem als konzentrische, einander zumindest teilweise umgebende Lagen zu konstruieren. Materialien oder Artikel sind dabei z.T. nicht in direktem Kontakt miteinander, sondern es befindet sich z.B. gegebenenfalls Luft oder ein anderes Gas dazwischen.

Die EU-Rahmenverordnung (EG) Nr.1935/2004 vom Oktober 2004 gilt nach Artikel 1 für Materialien und Gegenstände, einschließlich aktiver und intelligenter Lebensmittelkontakt-Materialien und -Gegenstände, die als Fertigerzeugnis dazu bestimmt sind, mit Lebensmitteln in Berührung zu kommen, oder bereits mit Lebensmitteln in Berührung sind und dazu bestimmt sind, oder vernünftigerweise vorhersehen lassen, dass sie bei normaler oder vorhersehbarer Verwendung mit Lebensmitteln in Berührung kommen oder ihre Bestandteile an Lebensmittel abgeben.

Gemäß der Erfindung wurde auch untersucht, welche polymeren Materialien oder Produkte, die ein ggf. sensibles Füllgut (z.B. Nahrungsmittel) umschließen können (z.B. Innenbeutel), gegenüber anderen, weiter außen befindlichen Materialien (z.B. Transportverpackung aus recyceltem Karton oder Polymer) gute funktionelle Barriere-Eigenschaften aufweisen.

Analog wurde untersucht, ob z. B. eine Folie oder ein Formkörper (Schale) aus einer o.g. Polymerzusammensetzung funktionelle Barriere-Eigenschaften gegenüber Stoffen aus einem aufgebrachten Etikett besitzt, oder, ob ein Substrat aus einer Polymerzusammensetzung eine gute funktionelle Barriere gegenüber Stoffen aus der aufgebrachten Druckfarbe (z.B. Photoinitiatoren, Stabilisatoren) darstellt. Die Zeit, die ein Stoff benötigt, um von außen (z.B. Umverpackung oder Druckfarbe) durch eine funktionelle Barriere (z.B. Primärverpackung oder Substrat) hindurch zu wandern, wird auch Durchbruchzeit $\theta$ (Theta) genannt. Diese Durchbruchzeit ist nach Gleichung 4 direkt proportional zur Dicke des Innenbeutels, $d_P$ zum Quadrat, und umgekehrt proportional zu dem Diffusionskoeffizienten $D_{FB}$ des Stoffes in der funktionellen Barriere (FB):

$$\theta = \frac{1}{6} * \frac{d_P^2}{D_{FB}} \qquad \text{(Gleichung 4)}$$

Die Wirkungsweise einer funktionellen Barriere wird auch in den Abbildungen der **FIG. 1** und **FIG.2** dargestellt, wobei die Migration ($m_{F,t/A}$) gegen die Zeit (t) aufgetragen ist.

Ist keine funktionelle Barriere vorhanden bzw. befindet sich der migrierende Stoff in der Lebensmittel-Kontaktschicht, so ist ein zeitlicher Verlauf der Migration zu beobachten, der der Graphik von FIG. 1 entspricht. Wird die Migration des Stoffes zu zwei beliebigen Zeitpunkten bestimmt, und werden die beiden Punkte durch eine Gerade verbunden, so wird die Gerade die y-Achse (Migration, $m_{F,t/A}$) immer bei einem positiven Wert (I > 0) schneiden.

Ist eine funktionelle Barriere vorhanden, so ist ein zeitlicher Verlauf der Migration zu beobachten, der der Graphik von FIG. 2 entspricht. Wird die Migration des Stoffes zu zwei beliebigen Zeitpunkten bestimmt, und werden die beiden Punkte durch eine Gerade verbunden, so wird die Gerade die y-Achse (Migration, $m_{F,t/A}$) bei einem negativen Wert (I < 0) schneiden, wenn sich der eine Zeitpunkt innerhalb der Durchbruchzeit $\theta$ (*lag time*) befindet. Eine funktionelle Barriere (FB) aus einem Polymer ist gegenüber einem Stoff wirksam, wenn die Durchbruchzeit $\theta$ möglichst lange ist. Innerhalb der Durchbruchzeit findet kein Übergang/Migration des Stoffs von außerhalb der FB in das Füllgut statt.

Diese kann durch eine dicke Schicht erreicht werden, was aus Sicht von Ressourcenschonung und Wirtschaftlichkeit wenig zielführend ist.

Im Falle von z.B. Flaschen, Bechern und Schalen aus Polymer sind jedoch Materialdicken von einigen hundert Mikrometern nicht unüblich. Entsprechend sind die Durchbruchzeiten von Stoffen länger als bei Folien gleicher Materialbeschaffenheit.

Der Einsatz von Materialien wie Glas oder Metall als absolute Barriere gegenüber der Migration von Stoffen im Bereich der flexiblen Verpackung erscheint wegen mehrerer Nachteile nur als hypothetische Option.

Materialien mit funktionellen Barriere-Eigenschaften, wie z.B. o.g. Polymere und Mehrschichtverbunde, stellen eine technologisch kostengünstig realisierbare Möglichkeit dar. Zielführend ist der Einsatz von Materialien, durch die Stoffe nur sehr langsam hindurch wandern/migrieren können. In Barriere-Materialien weisen Stoffe niedrige Diffusionskoeffizienten $D_{FB}$, d.h. eine niedrige Migrationsgeschwindigkeit auf. Diffusionskoeffizienten sind z. T. in der Literatur zu finden oder können nach wissenschaftlich anerkannten Verfahren abgeschätzt werden. Ist der Diffusionskoeffizient eines Stoffs in einem Material bei einer gegebenen Temperatur bekannt, kann die Durchbruchzeit nach obiger Gleichung berechnet werden.

Bei den erfindungsgemäßen Untersuchungen wurde der qualitative Beitrag der Materialauswahl in Bezug auf die funktionelle Barriere-Wirkung dargestellt.

Polymere mit einer niedrigen polymerspezifischen Konstante ($A_P$-Wert) führen zu niedrigen Diffusionskoeffizienten ($D_{FB}$) und entsprechend langen Durchbruchzeiten $\theta$. Eine geringe Löslichkeit des Migranten (z.B. organisches Additiv) in dem Polymer ($c_{FB}$) führt zu niedrigen Konzentrationen des Additivs in dem Polymer und damit zu einem hohen Verteilungskoeffizienten ($K_{P,FB}$). Entsprechend flach verläuft der lineare Bereich der Kurve, wodurch sich auch nach langer Zeit niedrige Migrationswerte (mt) ergeben.

**FIG. 3** beschreibt die Konstante "Diffusionskoeffizient" ($D_{FB}$). Sie beschreibt die Geschwindigkeit, mit der ein Stoff in einen Polymer migriert. Andererseits wir der "Verteilungskoeffizient" ($K_{P,FB}$) beschrieben, der die relative Löslichkeit eines Stoffes (z.B. Additivs) zwischen benachbarten Schichten/Lagen eines Verbundsystems (z.B. einer Verpackung) beschreibt. Auf der Basis der beiden Koeffizienten lassen sich die funktionellen Barriere-Eigenschaften von Polymeren in Mehrschicht-Verbundstrukturen bzw. Packstoffsystemen in Bezug auf einen Additive, wie z.B. Mineralöle oder Stabilisatoren berechnen bzw. abschätzen. Somit kann die Wirksamkeit einer funktionellen Barriere gegenüber migrationsfähigen Stoffen bestimmt werden.

FIG. 4 beschreibt die unterschiedliche Löslichkeit ($c_{FB}$) eines Additivs (0,2% ODP) in verschiedenen Polymeren und die damit verbundene unterschiedliche Migration (10 Tage bei 40°C). Diese ist bei den Styrol-haltigen Polymeren GPPS und HIPS besonders niedrig. Der K-Wert ist der Verteilungskoeffizient des migrierenden Additivs in einem System aus Polymer und Lebensmittel-Simulans (Lösemittel). Der K-Wert (genauer $K_{P/L}$) von 1 sagt aus, dass ein migrierendes Additiv (z.B. ODP) sich im Gleichgewicht 1 x mehr im Polymer aufhält als im Lösemittel. In Gegenwart von 50 %-igem Ethanol geht der K-Wert für PE und PS gegen 1.

FIG. 5 beschreibt für verschiedene Polymere (Polystyrol, PET, Polypropylen und LD-Polyethylen) die "indefinite thickness", (Additiv 0,2% ODP; 10 Tage bei 40°C), die insbesondere bei den Styrol-haltigen Polymeren wie PS besonders gering ist.

Auch die Glastemperatur eines Polymers erweist sich für die Sperrwirkung gegen die Migration von Polymer-Additiven von Bedeutung. Das Polymer EPP, ein besonders zäher Schaum aus expandiertem Polypropylen, wird i.d.R beim Anwender geschäumt. Durch die niedrige $T_g$ von PP (5 °C) ist die Kettenmobilität von PP bei Raumtemperatur so hoch, dass PP-Granulate, die mit einem Schäum-Mittel (z.B. Pentan) beladen werden, ihr Schäum-Mittel innerhalb kürzester Zeit (bei Lagerung oder Transport) verlieren. Im Gegensatz dazu lässt sich EPS (expandierbares Polystyrol) herstellerseitig als Granulat mit dem Schäum-Mittel Pentan beladen, ohne dass während Lagerung und Transport ein signifikanter Pentan-Verlust auftritt. Dies liegt an der hohen $T_g$ von Polystyrol, die selbst beim Mischen mit bis zu 5 % Pentan nur auf ca. 80 °C absinkt und hoch genug zur Vermeidung von Kettenmobilität bei Raumtemperatur ist.

Als weitere Additive geeignet sind u.a.:
Weitere Lichtschutzmittel können alle üblichen Lichtschutzmittel eingesetzt werden, beispielsweise Verbindungen auf Basis von Benzophenon, Benztriazol, Zimtsäure, sowie sterisch gehinderte Amine (HALS).

Als Gleitmittel kommen beispielsweise Kohlenwasserstoffe wie Öle, Paraffine, PE-Wachse, PP-Wachse, Fettalkohole mit 6 bis 20 Kohlenstoffatomen, Ketone, Carbonsäuren wie Fettsäuren, Montansäure oder oxidiertes PE-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente in Betracht.

Als Stabilisatoren können übliche Antioxidantien, beispielsweise phenolische Antioxidantien, z.B. alkylierte Monophenole, Ester und/oder Amide der 3-(3,5-Di-tertierbutyl-4-hydroxyphenyl)-propionsäure und/oder Benztriazole eingesetzt werden. Auch (Tris-nonylphenyl)phosphit kann oftmals eingesetzt werden. Beispielhaft sind auch Antioxidantien in EP-A 698637 und EP-A 669367 genannt bzw. in Plastics Additives Handbook, (H. Zweifel, München 2009) erwähnt. Beispielsweise kann man als phenolische Antioxidantien 2,6-Di-tertierbutyl-4-methylphenol, Pentaerythrityl-tetrakis-[3-(3,5-di-tertiärbutyl-4-hydroxyphenyl)-propionat und N,N'-Di-(3,5-ditertiärbutyl-4-hydroxyphenyl-propionyl)-hexamethylendiamin einsetzen. Die genannten Stabilisatoren können einzeln oder in Mischungen verwendet werden.

Die erfindungsgemäßen Polymerzusammensetzungen (A) können beispielsweise pelletiert oder granuliert, oder nach allgemein bekannten Verfahren, beispielsweise durch Extrusion, Spritzguss oder Kalandrierung zu Folien, Schläuchen, Fasern, Profilen, Schuhschalen, technischen Formteilen, Gebrauchsartikeln, Formkörpern aller Art, Beschichtungen und/oder Blasformkörpern verarbeitet werden.

Die Erfindung wird durch die Beispiele, Figuren und die Ansprüche näher erläutert.

Beispiele

Um die technischen Vorteile der Erfindung zu illustrieren wurde die Migration von drei unterschiedlichen Additiven untersucht:

(Antioxidant 1): Sumilizer GM (phenolischer Stabilisator von Sumitomo Chemical, JP) (2-Tert-butyl-6-[(3-tert-butyl-2-hydroxy-5-methylphenyl)-methyl]-4-methylphenyl prop-2-enoat);

(Antioxidant 2): TNPP (Phosphit-Stabilisator)

(Tris-nonylphenyl)phosphit;

(Mineral Oil): handelsübliches Weißöl (Weichmacher, z.B. von Eni Oilproducts).

Diese folgenden Polymere wurden eingesetzt:
SBS1: Styrolux 3G55 (INEOS Styrolution, Frankfurt), ein gekoppeltes (sternförmiges) SBS-Polymerisat mit einer Bruttozusammensetzung: 74% Styrol / 26 % Butadien.

Polystyrol 158 (INEOS Styrolution, Frankfurt, Standard-PS mit Vicat B/50 von 101 °C, enthaltend kein Weißöl).

Es wurden 2.5 Gew.-% Mineral Oil (Weißöl DAB 10); 0,25 Gew.-% Antioxidant 1 ("Sumilizer GM"); und 0,4 Gew.-% Antioxidant 2 (Tris-nonylphenylphosphat (TNPP)) während der Schmelze-Verarbeitung als Stabilisatoren bzw. Inhaltsstoffe hinzugefügt.

SBS+PS

Es wurden ferner Mischungen der Polymer-Komponente SBS1 mit Polystyrol 158 (INEOS Styrolution, Frankfurt, Standard-PS mit Vicat B/50 von 101 °C, enthaltend kein Weißöl) hergestellt.

Diese Mischungen wurden durch Vermischen auf einem 2-Wellenextruder ZSK30 (Coperion) bei einer Masse-Temperatur von rund 240 °C hergestellt:

- SBS1 + 25% PS bedeutet: Abmischung von 75 Gew.-% Styrolux 3G55 mit 25 Gew.-% Polystyrol 158 (Stabile Morphologie: 2-Phasiger Blend mit lamellarer/zylindrischer Struktur);
- SBS1 + 50% PS bedeutet: Abmischung von 50 Gew.-% Styrolux 3G55 mit 50 Gew.-% Polystyrol 158 (Morphologie bestehend hauptsächlich aus PS als homogene, kontinuierliche Phase und Polybutadien-co-styrol als diskontinuierliche Phase, verteilt in Partikeln, zum Teil sind Lamellen sichtbar);
- SBS1 + 75% PS bedeutet: Abmischung von 25 Gew.-% Styrolux 3G55 mit 75 Gew.-% Polystyrol 158 (Stabile Morphologie mit PS als homogene, kontinuierliche Phase und Polybutadien-co-Styrol als diskontinuierliche Phase, verteilt in Partikeln).

Die jeweilige Morphologie wurde anhand von $RuO_4$ kontrastierten Ultramikrotom-Dünnschicht-Schnitten mit Hilfe eines üblichen Rasterelektronenmikroskops und einer Vergrößerung von 100.000 zu 1 ermittelt.

Durchführung der Migrationsmessungen:

Die Verwendung von Öl als Fett-Simulanz ist wegen analytisch-technischer Schwierigkeiten weniger geeignet, auch Ethanol 95%, sowie Iso-Oktan sind als Fett-Simulanzien infolge starker Wechselwirkung mit der Polymermatrix weniger aussagekräftig. Wässrige Simulanzien sind wegen der sehr geringen Löslichkeit der Additive schwierig.

Aus diesem Grunde wurden Migrationszellen eingesetzt, in die Polymer-Folien aus den Polymer-Zusammensetzungen:

"SBS1",
"SBS + 25%PS"
"SBS + 50 % PS" und
"SBS+75%PS"

mit je 1 mm Dicke (Tab 3) jeweils zwischen 2 Polyethylen-Folien (LDPE) mit 0.5 mm Dicke eingespannt wurden. Die Null-Migrationswerte mit Polyethylen (LDPE) wurden bestimmt. Nach Extraktion mit Diethylether wurden die Mengen an migrierten Substanzen (nach der in Tab. 3a angegebenen Zeiten und Temperaturen) mit Hilfe von FID-Gaschromatographie bestimmt:

Tabelle 3

| Geräte-Parameter: | |
|---|---|
| Säule: | DB1ht, 30m, ID 0.25mm, film 0,1 $\mu$m |
| Trägergas / flow: | Helium; 1.6 ml/min; 35 cm/sec |
| Injektor: | Split/splitless; 320°C |
| Injektion: | 1 $\mu$m splitless |
| Detektor: | FID; 320°C |
| Temperaturprogramm: | 60°C (2 min) 20°C /min 320°C |

Die Resultate der kinetischen Messungen der Migration (bei 40-70°C, in $\mu g/dm^2$) von den Inhaltsstoffen in SBS und SBS+25 %PS und der weiteren erfindungsgemäßen Blends (SBS + 50 bzw.+ 75 % PS) werden in Tabelle 3a gezeigt.

Aus den Migrationswerten wurden für die jeweilige Polymermatrix und den entsprechenden Migranten die Diffusionskoeffizienten, $D_p$, ermittelt und daraus mit Hilfe von Gleichung (1) die Migrationseigenschaften ermittelt.

Tabelle 3a

| | Antioxidant 1 M = 394 | | | Antioxidant 2 M = 689 | | | Mineral oil M = 515 | | |
|---|---|---|---|---|---|---|---|---|---|
| Temp. | 40°C | 60 °C | 70 °C | 40 °C | 60 °C | 70 °C | 40 °C | 60 °C | 70 °C |
| SBS 1* | 0,26 | 0,56 | 0,76 | 0,26 | 1,86 | 2,47 | 25,2 | 74,1 | 64,0 |
| +25% PS* | | | 0,51 | | | 0,29 | | | 47,6 |
| +50% PS | | | 0,15 | | | <0,1 | | | 9,5 |
| +75% PS | | | <0,01 | | | <0,1 | | | <2 |

* nicht erfindungsgemäß

Aus den Migrationswerten wurden für die jeweilige Polymermatrix und den entsprechenden Migranten die Diffusionskoeffizienten $D_P$ ermittelt und daraus mit Hilfe von Gleichung 2 die $A_P$-Werte berechnet, siehe

Tabelle 3b.

| | Antioxidant 1 M = 394 | | | Antioxidant 2 M = 689 | | | Mineral oil M = 515 | | |
|---|---|---|---|---|---|---|---|---|---|
| Temp. | 40°C | 60 ° | 70 ° | 40°C | 60 ° | 70 °C | 40°C | 60 °C | 70°C |
| SBS 1* | 5,0 | 5,0 | 5,1 | 4,5 | 5,5 | 6,0 | 9,0 | 10,3 | 8,9 |
| +25% PS* | | | 3,2 | | | 6.2 | | | 7.0 |
| +50% PS | | | 0,5 | | | n.b. | | | 4.5 |
| +75% PS | | | <-2 | | | <0 | | | <2 |

*nicht erfindungsgemäß n.b. ist nicht bestimmt

Das Mineralöl quillt die diskontinuierliche polymere Weichphase an und führt im Grenzbereich von einer erfindungsgemäßen, diskontinuierlichen (partikulären) Morphologie zu einer teilweise lamellaren Morphologie, die negative technische Effekte mit sich bringt. Dies wird z.B. an den Zusammensetzungen mit 50 Gew.-% Polystyrol und 50 Gew.-% Styrolux 3G55 als Polymer-Komponenten deutlich.

Es wurde gefunden, dass beim Übergang einer (co-kontinuierlichen) Struktur des Polymers in die, bei der erfindungsgemäßen Zusammensetzung (A) eingesetzten diskontinuierlichen, partikulären Struktur sowohl die Migrationswerte, als auch die $A_P$ Polymerspezifischen Parameter deutlich abfallen. Dies belegt, dass die Barriere-Wirkung der Polymerzusammensetzung erhöht wird, so dass die Polymerzusammensetzung (A) mit verminderter Migration von Stabilisatoren (bzw. Inhaltsstoffen) gemäß der Erfindung einen deutlichen technischen Vorteil verschafft.

Dies wird u.a. zur Herstellung von Verpackungen mit einer Verbundstruktur mit zwei unterschiedliche Schichten, (S1) aus thermoplastischer Mischung aus 25 Gew.% StyrolButadien-Styrol-Copolymer und 75 % PS, und einer weiteren Schicht (S2) aus nicht Styrol-haltigem Thermoplast, insbesondere Polyurethan oder PET, genutzt.

**Patentansprüche**

1.   Thermoplastische Polymerzusammensetzung (A) mit verminderter Migration von Stabilisatoren (S) und/oder weiteren Inhaltsstoffen (I), enthaltend 50 bis 99,9 Gew.-%, bezogen auf die Polymerzusammensetzung (A), mindestens eines thermoplastischen Polymer (P), welches Migrations-Barriere-Eigenschaften für Stabilisatoren aufweist, sowie mindestens 0,1 Gew.-%, oftmals 0,1 bis 2,0 Gew.-%, bezogen auf die Polymerzusammensetzung (A), mindestens einer Stabilisator-Komponente (S) und/oder mindestens 0,1 Gew.-%, oftmals 0,1 bis 2,0 Gew.-%, bezogen auf die Polymerzusammensetzung (A), mindestens eines weiteren Inhaltsstoffes (I),

wobei für die thermoplastischen Polymerzusammensetzung (A) gilt:

a) die Glasübergangstemperatur $T_g$ des thermoplastischen Polymers (P) liegt oberhalb der maximalen Gebrauchstemperatur von 50 °C, und

b) die Polymerspezifische Konstante für Polymere ($A_P$) des thermoplastischen Polymers (P) liegt bei kleiner 1, wobei die Polymerspezifische Konstante für Polymere ($A_P$) wie in der Beschreibung offenbart ermittelt wird, und

c) der daraus abgeleitete Diffusionskoeffizient ($D_P$) des thermoplastischen Polymers (P) für Mineralöl ist bei 20 °C kleiner $10^{-12}$ cm$^2$/s, wobei der Diffusionskoeffizient ($D_P$) wie in der Beschreibung offenbart ermittelt wird, und

d) die Morphologie des thermoplastischen Polymers (P) ist zweiphasig heterogen, wobei, bei zweiphasig heterogener Morphologie des thermoplastischen Polymers (P), die eine Polymer-Komponente ($P_p$) mit dem höheren $A_P$-Wert und dem höheren Diffusionskoeffizienten ($D_P$) als diskontinuierliche Phase in Partikelform mit einer gewichtsmittleren Partikelgröße (D) von 20 nm bis 10 $\mu$m vorliegt, eingebettet ist in eine Polymer-Komponente ($P_m$) mit niedrigerem $A_P$-Wert und niedrigerem Diffusionskoeffizienten ($D_P$),

wobei die Morphologie des thermoplastischen Polymers (P) keine co-kontinuierliche Struktur aufweist.

2. Thermoplastische Polymerzusammensetzung (A) mit verminderter Migration gemäß Anspruch 1, **dadurch gekennzeichnet, dass** sie als thermoplastisches Polymer (P) ein Styrol-haltiges Polymer mit einer Glasübergangstemperatur $T_g$ von mindestens 60 °C, insbesondere mindestens 70 °C enthält.

3. Thermoplastische Polymerzusammensetzung (A) mit verminderter Migration gemäß Anspruch 1 oder 2, **dadurch gekennzeichnet, dass** sie als thermoplastisches Polymer (P) eine Styrol-haltige Polymerkomponente aus der Gruppe bestehend aus Polystyrol (PS), insbesondere HIPS und GPPS, sowie SBS-Copolymer/PS-Blends und SBC-Copolymer/PS-Blends enthält.

4. Thermoplastische Polymerzusammensetzung (A) mit verminderter Migration gemäß mindestens einem der Ansprüche 1 bis 3, **dadurch gekennzeichnet, dass** sie als thermoplastisches Polymer (P) ein Polystyrol (PS) sowie ein SBS-Copolymer enthält.

5. Thermoplastische Polymerzusammensetzung (A) mit verminderter Migration gemäß mindestens einem der Ansprüche 1 bis 4, **dadurch gekennzeichnet, dass** das thermoplastisches Polymer (P) mindestens 50 Gew-% an Polystyrol (PS) sowie mindestens 10 Gew-% an SBS-Copolymer enthält.

6. Thermoplastische Polymerzusammensetzung (A) mit verminderter Migration gemäß mindestens einem der Ansprüche 1 bis 5, **dadurch gekennzeichnet, dass** sie mindestens eine Stabilisator-Komponente (S) aus der Gruppe bestehend aus Antioxidantien und Lichtstabilisatoren enthält, und/oder mindestens einen weiteren Inhaltsstoff (I) aus der Gruppe bestehend aus Restmonomere und Oligomere enthält.

7. Thermoplastische Polymerzusammensetzung (A) mit verminderter Migration gemäß mindestens einem der Ansprüche 1 bis 6, **dadurch gekennzeichnet, dass** sie 0,1 bis 2,0 Gew.-%, bezogen auf die Polymerzusammensetzung (A), mindestens einer Stabilisator-Komponente (S) enthält, insbesondere mindestens ein Antioxidants.

8. Thermoplastische Polymerzusammensetzung (A) mit verminderter Migration gemäß mindestens einem der Ansprüche 1 bis 7, **dadurch gekennzeichnet, dass** sie 0,1 bis 2,0 Gew.-%, bezogen auf die Polymerzusammensetzung (A), zweier unterschiedlicher Stabilisator-Komponenten (S) enthält, sowie optional zusätzlich mindestens einen weiteren Inhaltsstoff.

9. Verbundstruktur für Verpackungszwecke, enthaltend mindestens zwei unterschiedliche Schichten, wobei mindestens eine Schicht (S1) aus einer thermoplastischen Polymerzusammensetzung (A) mit verminderter Migration gemäß mindestens einem der Ansprüche 1 bis 8 besteht.

10. Verbundstruktur für Verpackungszwecke gemäß Anspruch 9, enthaltend mindestens zwei unterschiedliche Schichten, wobei mindestens eine Schicht (S1) weitgehend aus einer thermoplastischen Polymerzusammensetzung (A) aus Polystyrol (PS), SBS-Copolymer/PS-Blends und/oder SBC-Copolymer/PS-Blends besteht, und mindestens eine weitere Schicht (S2) weitgehend aus einer nicht Styrol-haltigen thermoplastischen Polymerzusammensetzung (A2) besteht.

11. Verfahren zur Herstellung einer thermoplastischen Polymerzusammensetzung (A) mit verminderter Migration von Stabilisatoren (S) und/oder weiteren Inhaltsstoffen (I), gemäß einem der Ansprüche 1 bis 8, bei dem mindestens ein thermoplastisches Polymer (P), welches Migrations-Barriere-Eigenschaften aufweist, mit mindestens einer Stabilisator-Komponente (S) sowie ggf. weiteren Polymeradditiven vermischt wird.

12. Verwendung einer thermoplastischen Polymerzusammensetzung (A) mit verminderter Migration von Stabilisatoren (S) und/oder weiteren Inhaltsstoffen (I) gemäß einem der Ansprüche 1 bis 8 zur Herstellung von Folien, Fasern oder Formkörpern.

13. Verwendung einer Verbundstruktur gemäß mindestens einem der Ansprüche 9 oder 10, enthaltend mindestens zwei unterschiedliche Schichten, bei der mindestens eine Schicht (S1) aus einer thermoplastischen Polymerzusammensetzung (A) mit verminderter Migration besteht, zur Bereitstellung von Verpackungen mit erhöhtem Widerstand gegen Delamination.

14. Verfahren zur Herstellung einer Verbundstruktur, enthaltend mindestens zwei unterschiedliche Schichten, wobei mindestens eine Schicht (S1) aus einer thermoplastischen Polymerzusammensetzung (A) mit verminderter Migration gemäß mindestens einem der Ansprüche 1 bis 8 besteht, durch Bereitstellung der Schicht (S1) und mindestens einer weiteren Schicht (S2) sowie Verbinden der mindestens zwei Schichten.

## Claims

1. Thermoplastic polymer composition (A) with reduced migration of stabilizers (S) and/or further ingredients (I), comprising 50 to 99.9 wt.-%, based on the polymer composition (A), of at least one thermoplastic polymer (P) which has migration barrier properties for stabilizers, and at least 0.1 wt.-%, often 0.1 to 2.0 wt.-%, based on the polymer composition (A), of at least one stabilizer component (S) and/or at least 0.1 wt.-%, often 0.1 to 2.0 wt.-%, based on the polymer composition (A), of at least one further ingredient (I), wherein for the thermoplastic polymer composition (A) applies:

   a) the glass transition temperature $T_g$ of the thermoplastic polymer (P) is above the service temperature of 50°C, and
   b) the polymer-specific constant for polymers ($A_P$) of the thermoplastic polymer (P) is less than 1, wherein the polymer-specific constant for polymers ($A_P$) is determined as disclosed in the description, and
   c) the diffusion coefficient ($D_P$), derived therefrom, of the thermoplastic polymer (P) for mineral oil is less than $10^{-12}$ $cm^2$/s, at 20°C, wherein the diffusion coefficient ($D_P$) is determined as disclosed in the description, and
   d) the morphology of the thermoplastic polymer (P) is two-phase heterogeneous,

   where, in the case of two-phase heterogeneous morphology of the thermoplastic polymer (P), the polymer component (Pp) having the higher $A_P$ value and the higher diffusion coefficient ($D_P$) present as a discontinuous phase in particle form with a weight-average particle size (D) of 20 nm to 10 $\mu$m, is embedded in a polymer component ($P_m$) of a lower $A_P$ value and lower diffusion coefficient ($D_P$), where the morphology of the thermoplastic polymer (P) does not have a co-continuous structure.

2. Thermoplastic polymer composition (A) with reduced migration according to claim 1, **characterized in that** it comprises as thermoplastic polymer (P) a styrene-containing polymer having a glass transition temperature $T_g$ of at least 60°C, in particular at least 70°C.

3. Thermoplastic polymer composition (A) with reduced migration according to claim 1 or 2, **characterized in that** it comprises as thermoplastic polymer (P) a styrene-containing polymer component from the group consisting of polystyrene (PS), in particularly HIPS and GPPS, and SBS copolymer/PS blends and SBC copolymer/PS blends.

4. Thermoplastic polymer composition (A) with reduced migration according to at least one of claims 1 to 3, **characterized in that** it comprises as thermoplastic polymer (P) a polystyrene (PS) and an SBS copolymer.

5. Thermoplastic polymer composition (A) with reduced migration according to at least one of claims 1 to 4, **characterized in that** the thermoplastic polymer (P) comprises at least 50 wt.-% of polystyrene (PS) and at least 10 wt.-% of SBS copolymer.

6. Thermoplastic polymer composition (A) with reduced migration according to at least one of claims 1 to 5, **characterized in that** it comprises at least one stabilizer component (S) from the group consisting of antioxidants and light stabilizers, and/or comprises at least one further ingredient (I) from the group consisting of residual monomers and oligomers.

7. Thermoplastic polymer composition (A) with reduced migration according to at least one of claims 1 to 6, **characterized in that** it contains 0.1 to 2.0 wt.-%, based on the polymer composition (A), of at least one stabilizer component (S), in particular at least one antioxidant.

8. Thermoplastic polymer composition (A) with reduced migration according to at least one of claims 1 to 7, **characterized in that** it contains 0.1 to 2.0 wt.-%, based on the polymer composition (A), of two different stabilizer components (S), and optionally additionally at least one further ingredient.

9. Composite structure for packaging use, comprising at least two different layers, where at least one layer (S1) consists of a thermoplastic polymer composition (A) with reduced migration according to at least one of claims 1 to 8.

10. Composite structure for packaging use according to claim 9, comprising at least two different layers, wherein at least one layer (S1) consists largely of a thermoplastic polymer composition (A) of polystyrene (PS), SBS copolymer/PS blends and/or SBC copolymer/PS blends, and at least one further layer (S2) consists largely of a non-styrene-containing thermoplastic polymer composition (A2).

11. Process for producing a thermoplastic polymer composition (A) with reduced migration of stabilizers (S) and/or further ingredients (I), according to any of claims 1 to 8, wherein at least one thermoplastic polymer (P) which has migration barrier properties is mixed with at least one stabilizer component (S) and optionally further polymer additives.

12. Use of a thermoplastic polymer composition (A) with reduced migration of stabilizers (S) and/or further ingredients (I) according to any of claims 1 to 8 for the production of films, fibers or moldings.

13. Use of a composite structure according to at least one of claims 9 or 10, comprising at least two different layers, wherein at least one layer (S1) consists of a thermoplastic polymer composition (A) with reduced migration, for providing packaging with enhanced resistance to delamination.

14. Process for producing a composite structure, comprising at least two different layers, where at least one layer (S1) consists of a thermoplastic polymer composition (A) with reduced migration according to at least one of claims 1 to 8, by providing the layer (S1) and at least one further layer (S2) and joining the at least two layers.

**Revendications**

1. Composition polymère thermoplastique (A) à migration réduite de stabilisants (S) et/ou d'autres ingrédients (I), contenant 50 à 99,9 % en poids, par rapport à la composition polymère (A), d'au moins un polymère thermoplastique (P) qui présente des propriétés de barrière à la migration pour les stabilisants, ainsi qu'au moins 0,1 % en poids, souvent de 0,1 à 2,0 % en poids, par rapport à la composition polymère (A), d'au moins un composant stabilisant (S) et/ou au moins 0,1 %, souvent de 0,1 à 2,0 % en poids, par rapport à la composition polymère (A), d'au moins un autre ingrédient (I),

où, pour la composition de polymère thermoplastique (A) :

a) la température de transition vitreuse $T_g$ du polymère thermoplastique (P) est supérieure à la température maximale d'utilisation de 50 °C ; et
b) la constante spécifique aux polymères ($A_P$) du polymère thermoplastique (P) est inférieure à 1, la constante spécifique aux polymères ($A_P$) étant déterminée comme indiqué dans la description ; et
c) le coefficient de diffusion ($D_P$) du polymère thermoplastique (P) pour l'huile minérale qui en est dérivé est inférieur à $10^{-12}$ $cm^2$/s à 20 °C, le coefficient de diffusion ($D_P$) étant déterminé comme indiqué dans la description, et
d) la morphologie du polymère thermoplastique (P) est hétérogène à deux phases,

où, dans le cas d'une morphologie hétérogène à deux phases du polymère thermoplastique (P), un composant polymère (Pp) ayant la valeur $A_P$ la plus élevée et le coefficient de diffusion ($D_P$) le plus élevé se présente sous la forme d'une phase discontinue sous forme de particules ayant une taille de particules moyenne en poids (D) de 20 nm à 10 $\mu$m, est incorporé dans un composant polymère ($P_m$) ayant une valeur $A_P$ plus faible et un coefficient de diffusion ($D_P$) plus faible,

où la morphologie du polymère thermoplastique (P) ne présente pas de structure co-continue.

2. Composition polymère thermoplastique (A) à migration réduite selon la revendication 1, **caractérisée en ce qu'**elle contient comme polymère thermoplastique (P) un polymère contenant du styrène ayant une température de transition vitreuse $T_g$ d'au moins 60 °C, en particulier d'au moins 70 °C.

3. Composition polymère thermoplastique (A) à migration réduite selon la revendication 1 ou 2, **caractérisée en ce qu'**elle contient comme polymère thermoplastique (P) un composant polymère contenant du styrène choisi dans le groupe constitué par le polystyrène (PS), en particulier le HIPS et le GPPS, ainsi que les mélanges copolymère SBS/PS et les mélanges copolymère SBC/PS.

4. Composition polymère thermoplastique (A) à migration réduite selon au moins l'une quelconque des revendications 1 à 3, **caractérisée en ce qu'**elle contient comme polymère thermoplastique (P) un polystyrène (PS) ainsi qu'un copolymère SBS.

5. Composition polymère thermoplastique (A) à migration réduite selon au moins l'une quelconque des revendications 1 à 4, **caractérisée en ce que** le polymère thermoplastique (P) contient au moins 50 % en poids de polystyrène (PS) et au moins 10 % en poids de copolymère SBS.

6. Composition polymère thermoplastique (A) à migration réduite selon au moins l'une quelconque des revendications 1 à 5, **caractérisée en ce qu'**elle contient au moins un composant stabilisant (S) choisi dans le groupe constitué par des antioxydants et des stabilisants à la lumière, et/ou au moins un autre ingrédient (I) choisi dans le groupe constitué par des monomères résiduels et des oligomères.

7. Composition polymère thermoplastique (A) à migration réduite selon au moins l'une quelconque des revendications 1 à 6, **caractérisée en ce qu'**elle contient de 0,1 à 2,0 % en poids, par rapport à la composition polymère (A), d'au moins un composant stabilisant (S), notamment au moins un antioxydant.

8. Composition polymère thermoplastique (A) à migration réduite selon au moins l'une quelconque des revendications 1 à 7, **caractérisée en ce qu'**elle contient de 0,1 à 2,0 % en poids, par rapport à la composition polymère (A), de deux composants stabilisants (S) différents, ainsi qu'éventuellement en outre au moins un autre ingrédient.

9. Structure composite à des fins d'emballage, contenant au moins deux couches différentes, où au moins une couche (S1) est constituée d'une composition polymère thermoplastique (A) à migration réduite selon au moins l'une quelconque des revendications 1 à 8.

10. Structure composite à des fins d'emballage selon la revendication 9, contenant au moins deux couches différentes, où au moins une couche (S1) est constituée en grande partie d'une composition polymère thermoplastique (A) de polystyrène (PS), de mélanges copolymère SBS/PS et/ou de mélanges copolymère SBC/PS, et au moins une autre couche (S2) est constituée en grande partie d'une composition polymère thermoplastique (A2) ne contenant pas de styrène.

11. Procédé de préparation d'une composition polymère thermoplastique (A) à migration réduite de stabilisants (S) et/ou d'autres ingrédients (I), selon l'une quelconque des revendications 1 à 8, dans lequel au moins un polymère thermoplastique (P), qui présente des propriétés de barrière à la migration, est mélangé avec au moins un composant stabilisant (S) ainsi que, le cas échéant, d'autres additifs polymères.

12. Utilisation d'une composition polymère thermoplastique (A) à migration réduite de stabilisants (S) et/ou d'autres ingrédients (I) selon l'une quelconque des revendications 1 à 8 pour la fabrication de films, de fibres ou de corps moulés.

13. Utilisation d'une structure composite selon au moins l'une quelconque des revendications 9 ou 10, contenant au moins deux couches différentes, dans laquelle au moins une couche (S1) est constituée d'une composition polymère thermoplastique (A) à migration réduite, pour fournir des emballages ayant une résistance accrue au délaminage.

14. Procédé de fabrication d'une structure composite contenant au moins deux couches différentes, où au moins une couche (S1) est constituée d'une composition polymère thermoplastique (A) à migration réduite selon au moins l'une quelconque des revendications 1 à 8, en fournissant la couche (S1) et au moins une autre couche (S2) et en liant les au moins deux couches.

FIG.1

FIG.2

FIG.3

$$K_{P,FB} = \frac{c_{P,\infty}}{c_{FB,\infty}}$$

FIG.4

● Migration of ODP in different polymer matrices

0.2 % ODP,10d 40°C, 250 µm

FIG. 5

● "Infinite" thickness for different plastics
(0.2 % ODP,10d 40°C, K = 1)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10359450 A1
- EG 19352004
- EP 698637 A
- EP 669367 A

**In der Beschreibung aufgeführte Nicht-Patentliteratur**

- **RAINER BRANDSCH**. Recycelter Karton und Papier für Lebensmittelverpackungen? Migration von Mineralöl aus Kartonverpackungen in Lebensmittel kann durch Einbringen einer funktionellen Barriere minimiert werden. *InnoLETTER*, 1-8, www.innoform.de
- **T. BEGLEY** ; **L. CASTLE et al.** Evaluation of migration models that might be used in support of regulations for food contact plastics. *Food Additives and Contaminants*, January 2005, vol. 22 (1), 73-90
- **H. ZWEIFEL**. Plastics Additives Handbook. 2009